# EUROPÄISCHE PATENTSCHRIFT

(11) **EP 2 086 712 B1**
(45) Veröffentlichungstag und Bekanntmachung des Hinweises auf die Patenterteilung: **22.06.2011**
(21) Anmeldenummer: 07820410.4
(22) Anmeldetag: 20.09.2007
(51) Int. Cl.: B23D 49/16, B23D 51/02

(54) **MOTORISCH BETRIEBENE HANDWERKZEUGMASCHINE MIT EINER FUSSPLATTE**
PORTABLE POWER TOOL WITH A FOOT PLATE
MACHINE-OUTIL PORTATIVE ACTIONNEE PAR MOTEUR AVEC PLAQUE D'ASSISE

(30) Priorität: 19.10.2006 DE 102006049255
(43) Veröffentlichungstag der Anmeldung: 12.08.2009
(73) Patentinhaber: Robert Bosch GmbH, 70442 Stuttgart (DE)
(72) Erfinder: FUCHS, Rudolf, 73765 Neuhausen (DE)
(86) Internationale Anmeldenummer: PCT/EP2007/059972
(87) Internationale Veröffentlichungsnummer: WO 2008/046713

(56) Entgegenhaltungen:
- EP-A- 1 679 144
- DE-U1- 9 307 337
- US-A- 4 334 356

## Beschreibung

Die Erfindung bezieht sich auf eine motorisch betriebene Handwerkzeugmaschine, insbesondere eine Hubsäge, mit einer Fußplatte nach dem Oberbegriff des Anspruches 1.

### Stand der Technik

In der DE 10 2004 045 539 A1 wird eine Fußplatte für eine elektrische, handgeführte Stichsäge beschrieben, die aus einem plattenförmigen Grundelement besteht, in das eine Durchtrittsöffnung für das die Hubbewegung ausführende Sägeblatt eingebracht ist.

Um sicherzustellen, dass das Sägeblatt während des Betriebes nicht seitlich ausgelenkt wird und hierdurch ein mangelhafter Geradschnitt entsteht, sind in der Fußplatte Führungselemente vorgesehen, die das Sägeblatt seitlich spielfrei eingrenzen. Zur Aufnahme dieser Führungselemente ist die Fußplatte zweiteilig mit einer Grundplatte und einer hierzu parallelen Arbeitsplatte aufgebaut, wobei zwischen Grundplatte und Arbeitsplatte ein Aufnahmeraum für die Aufnahme der Führungselemente gebildet ist. Im laufenden Betrieb liegt die Arbeitsplatte auf dem zu bearbeitenden Werkstück auf.

Generell besteht bei derartigen Hubstichsägen das Problem, dass empfindliche Werkstückoberflächen, beispielsweise bei der Bearbeitung von Acrylglasplatten, durch das Führen der Hubstichsäge über das Werkstück verkratzen können. Die entstandenen Kratzer müssen nach der Bearbeitung herauspoliert werden.

Aus der US 4,334,356 ist eine Hubstichsäge bekannt, die mit einer Fußplatte aus Metall versehen ist, welche mit dem Gehäuse der Handwerkzeugmaschine verbunden ist. An die Unterseite der Grundplatte kann eine zusätzliche, schlittenförmige Platte aus Kunststoff befestigt werden, was mithilfe von Federklipps erfolgt. Der vordere, aufgebogene Teil der zusätzlichen Platte umgreift die vordere Stirnkante der Grundplatte.

Der vordere Abschnitt der zusätzlichen Platte ist noch oben umgebogen, wodurch an der Grundplatte eine Abstützung in Längsrichtung gegeben ist. Allerdings erfolgt die Befestigung der zusätzlichen Platte an der Grundplatte über die Federklipps in einer kompliziert durchzuführenden Weise. Da die zusätzliche Platte aus Kunststoff besteht, kann nicht ausgeschlossen werden, dass im Laufe der Zeit der aufgebogene, vordere Abschnitt der zusätzlichen Platte sich verformt, wodurch ein bündiges Anlegen an die Außenkontur der Grundplatte verhindert wird. In diesem Fall nimmt die zusätzliche Platte nicht mehr exakt die Sollposition an der Grundplatte ein, was dazu führen kann, dass die Öffnungen in der Grundplatte und der zusätzlichen Platte, durch die das Sägeblatt geführt ist, nicht mehr vollständig miteinander fluchten.

In der EP 1 679 144 A1 wird eine elektromotorisch angetriebene Stichsäge beschrieben, die mit einer am Gehäuse befestigten Fußplatte versehen ist, welche zur Bearbeitung auf der Werkstückoberfläche aufliegt. In die Fußplatte sind Stauräume eingebracht, in denen beispielsweise Ersatzteile oder Reparaturwerkzeug untergebracht werden kann und die von einer Abdeckung zu verschließen sind. Die Stauräume sind auf der dem Gehäuse der Handwerkzeugmaschine abgewandten Seite offen ausgebildet, so dass die Abdeckungen im montierten Zustand sich auf der Unterseite der Fußplatte befinden und bei der Werkstückbearbeitung auf der Werkstückoberfläche aufliegen. Die Abdeckungen können über eine Klettverbindung mit der Fußplatte verbunden werden. Der Oberbegriff von Anspruch 1 basiert auf diesem Dokument Offenbarung der Erfindung

Der Erfindung liegt die Aufgabe zugrunde, mit einfachen konstruktiven Maßnahmen eine motorisch betriebene Handwerkzeugmaschine mit einer Fußplatte in der Weise auszubilden, dass die Gefahr von Beschädigungen der Werkstückoberfläche reduziert ist.

Diese Aufgabe wird erfindungsgemäß mit den Merkmalen des Anspruches 1 gelöst. Die Unteransprüche geben zweckmäßige Weiterbildungen an.

Bei der erfindungsgemäßen Handwerkzeugmaschine mit einer Fußplatte, die insbesondere in handgeführten, elektrischen Sägemaschinen eingesetzt wird, beispielsweise in Hubstichsägen oder sonstigen Hubsägen, ist zusätzlich zu der Grundplatte eine Adapterplatte vorgesehen, wobei Grundplatte und Adapterplatte gemeinsam die Fußplatte bilden. An der Grundplatte ist eine Verbindungseinrichtung ausgebildet, über die die Adapterplatte lösbar mit der Grundplatte zu verbinden ist. Die Grundplatte ist mit dem Gehäuse der Handwerkzeugmaschine verbunden, wohingegen die Adapterplatte bevorzugt ausschließlich mit der Grundplatte verbunden ist.

Diese Ausführung eröffnet die Möglichkeit, je nach zu bearbeitendem Werkstück verschiedene Adapterplatten einzusetzen, die an das jeweilige Werkstück bzw. die Werkstückoberfläche angepasst sind. Der Wechsel der Adapterplatten und die Verwendung einer jeweils angepassten Adapterplatte hilft, Beschädigungen an den Werkstückoberflächen zu vermeiden. Der Wechsel der Adapterplatte ist mit einfachen Maßnahmen möglich, was auch einen Wechsel für den Fall erlaubt, dass eine Adapterplatte aufgrund von Verschmutzung ausgetauscht oder gereinigt werden muss. Der Einsatz von Adapter- oder Wechselplatten ermöglicht es beispielweise, je nach Anwendungsfall Platten aus sehr weichem Material bzw. einer entsprechend weichen Beschichtung zu verwenden, beispielsweise aus Filz, aus Leder oder dergleichen. Daneben können auch Standardplatten eingesetzt werden, die aus einem festeren bzw. härteren Material bestehen und gegebenenfalls auch ohne Beschichtung gefertigt sind, insbesondere aus Kunststoff oder Metall. Für eine Anpassung an unterschiedliche Werkstoffe der zu bearbeitenden Werkstücke werden vorteilhaft verschiedene Adapterplatten vorgehalten, die beispielsweise aus unterschiedlichen Kunststoffen gefertigt sind und/oder verschiedenartige Beschichtungen aufweisen.

Der Wechsel der Adapterplatte kann mit wenigen Handgriffen vollzogen werden, da die Adapterplatte lösbar nur mit der Grundplatte verbunden ist, wohingegen die Grundplatte fest mit dem Gehäuse der Handwerkzeugmaschine verbunden ist. Zum Wechseln der Adapterplatte wird die Verbindungseinrichtung gelöst, die Adapterplatte ausgetauscht und anschließend wieder die Verbindungseinrichtung geschlossen.

Die Verbindungseinrichtung, über die die Adapterplatte lösbar mit der Grundplatte verbunden ist, ist als Klettverbindung ausgeführt. Diese Klettverbindung erfordert grundsätzlich keine zusätzlichen Verbindungsmaßnahmen, um die Adapterplatte mit ausreichender Verbindungskraft an der Grundplatte zu halten. Für ein Lösen der Adapterplatte bzw. ein Anbringen der Adapterplatte sind keine Werkzeuge erforderlich. Gemäß einer vorteilhaften Ausführung umfasst die Klettverbindung ein auf die Grundplatte aufgebrachtes Klettgewebe, das beispielsweise nach Art einer Beschichtung unmittelbar auf die der Adapterplatte zugewandten Seite der Grundplatte aufgebracht ist.

Nach einer weiteren vorteilhaften Ausführung ist der Fußplatte zusätzlich zu der Grundplatte eine Standardplatte zugeordnet, die ebenfalls mit der Grundplatte zu verbinden ist. Möglich ist zum einen je nach Anwendungsfall ein wahlweiser Wechsel von Standardplatte und an die jeweilige Werkstückoberfläche angepasster Adapterplatte. Zum andern ist aber auch eine Ausführung mit einem Plattenpaket möglich, bestehend aus Grundplatte, Adapterplatte und Standardplatte, die parallel zueinander liegend aneinander gehalten sind, jedoch bei Bedarf voneinander gelöst werden können. Innerhalb dieses Plattenpaktes liegt die üblicherweise mit einer weicheren Struktur versehene Adapterplatte in der Mitte, die Adapterplatte ist somit von der Grundplatte und der Standardplatte eingerahmt, wodurch die Adapterplatte vor Verschmutzung und auch vor hohen mechanischen Belastungen geschützt ist. Wird die Adapterplatte benötigt, so wird die Verbindungseinrichtung gelöst und die Standardplatte entfernt, woraufhin die Adapterplatte frei liegt und zum Einsatz kommen kann. Hierbei hat es sich als zweckmäßig erwiesen, für die Halterung der Standardplatte eine separate Verbindungseinrichtung vorzusehen, die unabhängig von der Verbindungseinrichtung zwischen Grundplatte und Adapterplatte ausgeführt ist. Beispielsweise ist die Standardplatte an die Grundplatte angeschraubt, wofür insbesondere Ausnehmungen in die Adapterplatte zum Hindurchführen der Schrauben vorgesehen sind. Nach dem Lösen der Standardplatte liegt die Adapterplatte frei und ist lediglich über die ihr zugeordnete Verbindungseinrichtung an der Grundplatte gehalten, also insbesondere über die Klettverbindung.

In dem Ausführungsbeispiel mit dem Plattenpaket, gebildet aus Grundplatte, Adapterplatte und Standardplatte bildet der Zwischenraum zwischen der Grundplatte und der Standardplatte ein Depot zur Aufnahme einer oder gegebenenfalls auch mehrerer Adapterplatten. Bei Entfernen der Standardplatte liegt die Adapterplatte offen und es kann die nach außen gewandte Seite der Adapterplatte auf die zu bearbeitende Werkstückoberfläche aufgesetzt werden. Im Falle mehrerer Adapterplatten in diesem Depot wird die aktuell benötigte Adapterplatte in die Bearbeitungsposition gebracht.

Möglich ist auch eine beidseitige Beschichtung einer Adapterplatte mit unterschiedlichen Materialien, so dass bei einem Wenden der Adapterplatte unterschiedliche Oberflächen der Adapterplatte mit entsprechend unterschiedlichen physikalischen Eigenschaften zum Einsatz kommen.

Weitere Vorteile und zweckmäßige Ausführungen sind den weiteren Ansprüchen, der Figurenbeschreibung und den Zeichnungen zu entnehmen. Es zeigen:
- Fig. 1: eine Seitenansicht einer Hubstichsäge, deren Sägeblatt durch eine Öffnung in einer Fußplatte geführt ist, welche aus einer fest mit dem Gehäuse verbundenen Grundplatte und einer lösbar an der Grundplatte gehaltenen, zusätzlichen Platte besteht,
- Fig. 2: eine Ansicht auf die Unterseite der Grundplatte mit zwei parallel verlaufenden Klettgewebestreifen, die Bestandteil einer Verbindungseinrichtung für die Verbindung der zusätzlichen Platte an der Grundplatte sind,
- Fig. 3: einen Schnitt durch eine Fußplatte, bestehend aus einer Grundplatte und einer an die Grundplatte über die Klettverbindung angebundenen Adapterplatte aus weicherem Werkstoff, welche unmittelbar auf der Oberfläche eines zu bearbeitenden Werkstückes aufliegt,
- Fig. 4: einen Schnitt durch eine Fußplatte mit Grundplatte und über Schrauben angebundener Standardplatte,
- Fig. 5: das Ausführungsbeispiel gemäß Fig. 4, jedoch mit einer Adapterplatte anstelle der Standardplatte,
- Fig. 6: ein weiteres Ausführungsbeispiel einer Fußplatte, bestehend aus einem Plattenpaket mit Grundplatte, Standardplatte und zwischenliegender Adapterplatte,
- Fig. 7: das Ausführungsbeispiel nach Fig. 6 mit abgenommener Standardplatte, so dass die Adapterplatte frei liegt,
- Fig. 8: ein weiteres Ausführungsbeispiel einer Fußplatte, bestehend aus Grundplatte, Standardplatte und zwischenliegender Adapterplatte, wobei die Adapterplatte und die Standardplatte ein über eine Klettverbindung zusammenhängendes Plattenpaket bilden, das um 180° gewendet werden kann,
- Fig. 9: das Ausführungsbeispiel nach Fig. 8 mit gewendetem Plattenpaket.

In den Figuren sind gleiche Bauteile mit gleichen Bezugszeichen versehen.

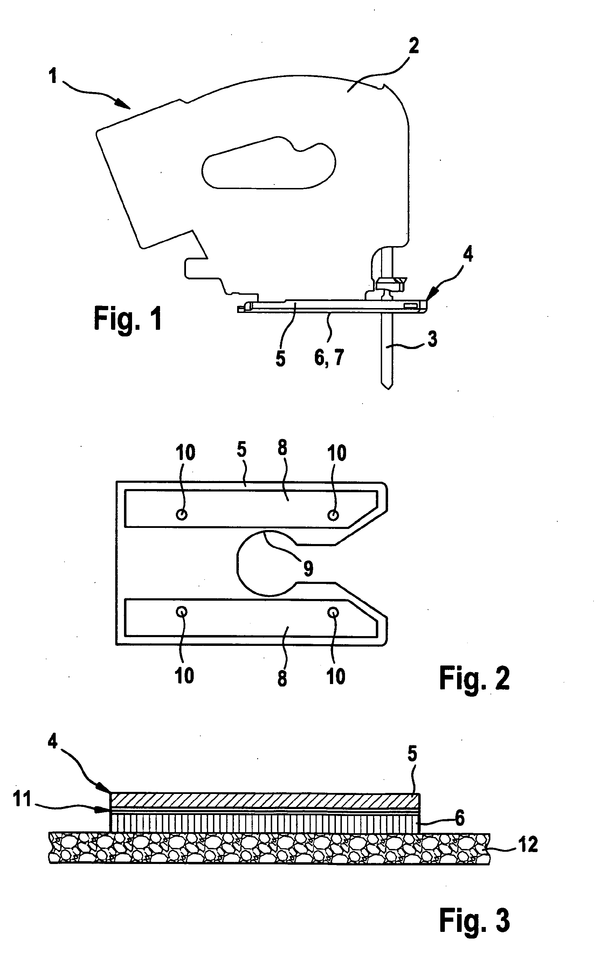

Bei der in Fig. 1 dargestellten Handwerkzeugmaschine handelt es sich um eine elektrische Hubstichsäge 1 mit einem Gehäuse 2 und einem Sägeblatt 3, welches in einer Fußplatte 4 beweglich geführt ist. Die Fußplatte 4 ist zweiteilig aufgebaut und besteht aus einer Grundplatte 5, die mit dem Gehäuse 2 verbunden ist, sowie einer zusätzlichen Platte 6 bzw. 7, die über eine Verbindungseinrichtung mit der Grundplatte 5 lösbar verbunden ist

Wie Fig. 2 zu entnehmen, weist die dem Gehäuse 2 abgewandte Unterseite der Grundplatte 5, die Bestandteil der Fußplatte 4 ist, eine Durchtrittsöffnung 9 auf, durch die das Sägeblatt 3 hindurchgeführt ist. Außerdem sind auf der Unterseite zwei parallel verlaufende, diesseits und jenseits der Durchtrittsöffnung 9 angeordnete Klettgewebestreifen 8 auf die Grundplatte 5 aufgebracht, die Bestandteil der Verbindungseinrichtung zur Halterung der Platte 6 bzw. 7 (Fig. 1) an der Grundplatte 5 sind.

Wie Fig. 2 weiter zu entnehmen, sind zusätzliche Ausnehmungen bzw. Bohrungen 10 in die Grundplatte 5 in Höhe der Klettgewebestreifen 8 eingebracht. Diese Ausnehmungen bzw. Bohrungen 10, die gegebenenfalls auch als Sacklochbohrung ausgeführt sein können, dienen als Bestandteil einer zusätzlichen Verbindungseinrichtung zur Anbindung einer zusätzlichen Platte.

Im Ausführungsbeispiel nach Fig. 3 besteht die Fußplatte 4 aus der Grundplatte 5, die insbesondere fest mit dem Gehäuse der Handwerkzeugmaschine verbunden ist, sowie einer Adapterplatte 6, die über eine Verbindungseinrichtung 11 an die Grundplatte 5 angebunden ist, wobei diese Verbindungseinrichtung 11 die Klettgewebestreifen 8 (Fig. 2) umfasst. Die Klettgewebestreifen auf der Unterseite der Grundplatte wirken mit zusätzlichem Gewebe zusammen, welches auf die zugewandte Oberfläche der Adapterplatte 6 aufgebracht ist. Bei diesem zusätzlichen Gewebe handelt es sich beispielhaft ebenfalls um Klettgewebe, wobei im Prinzip auch jegliches Stoffgewebe verwendet werden kann, welches sich für eine Klettverbindung eignet. Die der Grundplatte 5 abgewandte Seite der Adapterplatte 6 ist an die Oberfläche des zu bearbeitenden Werkstückes 12 angepasst. Beispielsweise ist die Arbeitsfläche der Adapterplatte 6 mit einer auf die Werkstückoberfläche angepassten Beschichtung versehen. Möglich ist aber auch, die Adapterplatte 6 komplett aus einem entsprechenden Werkstoff zu fertigen.

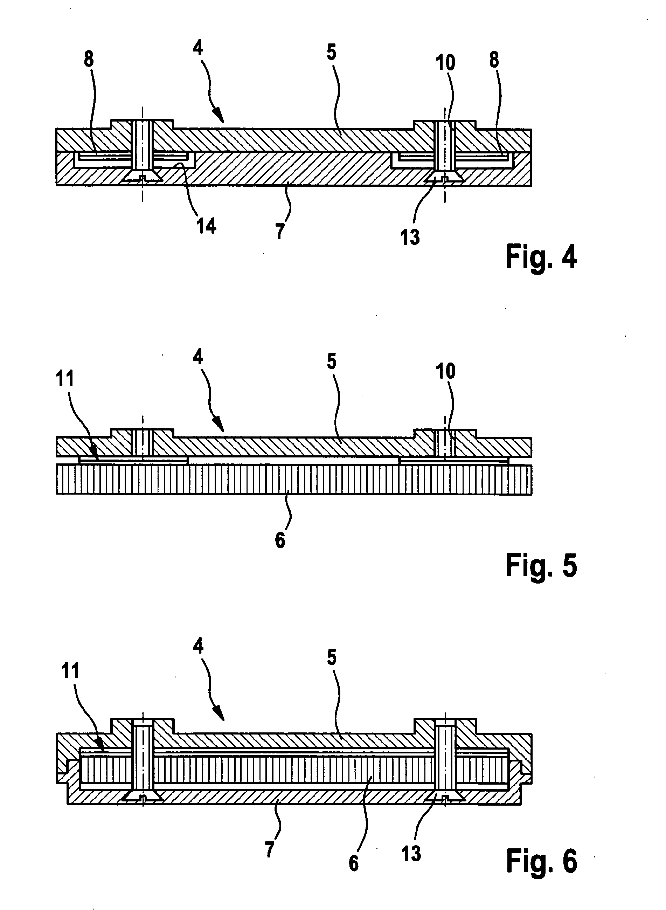

In den Figuren 4 und 5 ist ein weiteres Ausführungsbeispiel dargestellt. In Fig. 4 besteht die Fußplatte 4 aus der Grundplatte 5 und der daran über Schrauben 13 gehaltenen Standardplatte 7. Die Schrauben 13 ragen in die Bohrungen bzw. Ausnehmungen 10 ein, die in die Grundplatte 5 eingebracht sind. Bei einem Lösen der Schrauben 13 kann die Standardplatte 7 entfernt werden.

Die Standardplatte 7 weist auf ihrer der Grundplatte 5 zugewandten Seite Aussparungen 14 auf, die zur Aufnahme der Klettgewebestreifen 8 auf der Unterseite der Grundplatte 5 ausgebildet sind.

In Fig. 5 ist die Fußplatte 4 mit Grundplatte 5 und ausgetauschter Platte dargestellt, nämlich einer Adapterplatte 6 anstelle der Standardplatte 7. Die Anbindung der Adapterplatte 6 erfolgt über die Klett-Verbindungseinrichtung 11, deren Bestandteil die Klettgewebestreifen 8 sind. Durch Lösen der Verbindungseinrichtung 11 können unterschiedliche Adapterplatten 6 mit der Grundplatte 5 verbunden werden.

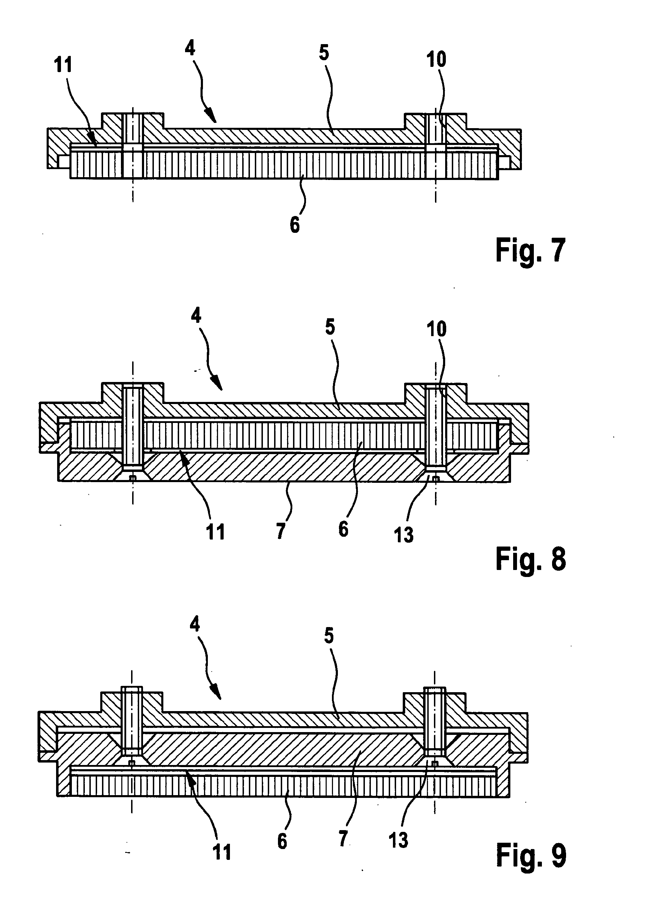

In dem Ausführungsbeispiel gemäß den Figuren 6 und 7 ist die Fußplatte 4 grundsätzlich dreiteilig aufgebaut mit Grundplatte 5, Standardplatte 7 und zwischenliegender Adapterplatte 6. Die Standardplatte 7 ist über die Schrauben 13 an die Grundplatte 5 angeschraubt, wobei die Schrauben 13 durch Ausnehmungen hindurchgeführt sind, die in die Adapterplatte 6 eingebracht sind. Diese Ausnehmungen fluchten mit den korrespondierenden Ausnehmungen bzw. Bohrungen 10, welche in die Grundplatte 5 eingebracht sind. Durch Lösen der Schrauben 13 und Entfernen der Standardplatte 7 liegt die Adapterplatte 6 offen, so dass deren Arbeitsseite zum Einsatz gebracht werden kann. Die Adapterplatte 6 ist über die Klett-Verbindungseinrichtung 11 an der Grundplatte 5 gehalten.

Auch im Ausführungsbeispiel nach den Figuren 8 und 9 sind drei parallel zueinander angeordnete Platten vorgesehen, nämlich die Grundplatte 5, die Adapterplatte 6 und die Standardplatte 7. Innerhalb dieses Plattenstapels sind die Adapterplatte 6 und die Standardplatte 7 über die Klett-Verbindungseinrichtung 11 miteinander verbunden und können im zusammenhängenden Zustand von der Grundplatte 5 gelöst und um 180° gewendet und anschließend wieder mit der Grundplatte 5 verbunden werden. Adapterplatte 6 und Standardplatte 7 sind über die Klett-Verbindungseinrichtung 11 miteinander lösbar verbunden. Beide Platten 6 und 7 sind gemeinsam über die Schrauben 13 mit der Grundplatte 5 verbunden. Bei einem Wechsel des Paketes, bestehend aus Adapterplatte 6 und Standardplatte 7 (Übergang von Fig. 8 zu Fig. 9) werden die Schrauben 13 gelöst, die beiden Platten gewendet und anschließend wieder mit der Grundplatte 5 verschraubt. Um diese Verschraubung in beiden Positionen der Adapterplatte 6 und der Standardplatte 7 zu ermöglichen, sind die fluchtenden Bohrungen durch die Platten 6 und 7 durchgehend ausgebildet.

## Patentansprüche

1. Motorisch betriebene Handwerkzeugmaschine, insbesondere Hubsäge (1), mit einer Fußplatte (4) mit einer Durchtrittsöffnung (9) für das Werkzeug der Handwerkzeugmaschine, wobei die Fußplatte (4) zweiteilig mit einer Grundplatte (5) und einer Adapterplatte (6) aufgebaut ist und die Grundplatte (5) mit dem Gehäuse (2) der Handwerkzeugmaschine verbunden ist, wobei an der Grundplatte (5) eine Verbindungseinrichtung (11) ausgebildet ist, über die die Adapterplatte (6) lösbar an die Grundplatte (5) angebunden ist, wobei die an die Werkstückoberfläche angepasste Adapterplatte (6) über eine Klettverbindung mit der Grundplatte (5) verbunden ist
**dadurch gekennzeichnet, dass** die Grundplatte (5) seitliche Wandungen aufweist, die einen Aufnahmeraum zur Aufnahme der Adapterplatte (6) begrenzen.

2. Handwerkzeugmaschine nach Anspruch 1,
**dadurch gekennzeichnet, dass** die Klettverbindung ein auf die Grundplatte (5) aufgebrachtes Klettgewebe (8) und ein mit dem Klettgewebe (8) zusammenwirkendes Gewebe umfasst, welches auf die zugewandte Oberfläche der Adapterplatte (6) aufgebracht ist.

3. Handwerkzeugmaschine nach Anspruch 1 oder 2,
**dadurch gekennzeichnet, dass** zusätzlich zu der Adapterplatte (6) eine Standardplatte (7) vorgesehen ist, die über eine Verbindungseinrichtung (11) mit der Grundplatte (5) zu verbinden ist.

4. Handwerkzeugmaschine nach Anspruch 3,
**dadurch gekennzeichnet, dass** die Verbindungseinrichtung (11) für die Standardplatte (7) separat von der Verbindungseinrichtung (11) für die Adapterplatte (6) ausgebildet ist.

5. Handwerkzeugmaschine nach Anspruch 4,
**dadurch gekennzeichnet, dass** die Verbindungseinrichtung (11) für die Standardplatte (7) als Schraubverbindung ausgeführt ist.

6. Handwerkzeugmaschine nach einem der Ansprüche 3 bis 5,
**dadurch gekennzeichnet, dass** die Grundplatte (5), die Adapterplatte (6) und die Standardplatte (7) ein Plattenpaket bilden.

7. Handwerkzeugmaschine nach Anspruch 6,
**dadurch gekennzeichnet, dass** innerhalb des Plattenpakets die Adapterplatte (6) zwischen der Grundplatte (5) und der Standardplatte (7) angeordnet ist.

8. Handwerkzeugmaschine nach Anspruch 6 oder 7,
**dadurch gekennzeichnet, dass** in die Adapterplatte (6) eine Ausnehmung (10) eingebracht ist, durch die ein Verbindungselement der Verbindungseinrichtung (11) für die Standardplatte (7) hindurchgeführt ist.

9. Handwerkzeugmaschine nach einem der Ansprüche 3 bis 8,
**dadurch gekennzeichnet, dass** in die Standardplatte (7) eine Ausnehmung (10) für die Verbindungseinrichtung (11) der Adapterplatte (6) eingebracht ist.

## Claims

1. Motor-operated portable power tool, in particular a reciprocating saw (1), comprising a foot plate (4) having a passage opening (9) for the tool of the portable power tool, wherein the foot plate (4) is of two-piece construction with a base plate (5) and an adapter plate (6), and the base plate (5) is connected to the housing (2) of the portable power tool, wherein a connecting device (11), via which the adapter plate (6) is detachably connected to the base plate (5), is formed on the base plate (5), wherein the adapter plate (6) adapted to the workpiece surface is connected to the base plate (5) via a hook-and-loop connection, **characterized in that** the base plate (5) has lateral walls which define an accommodating space for accommodating the adapter plate (6).

2. Portable power tool according to Claim 1, **characterized in that** the hook-and-loop connection comprises a hook-and-loop fabric (8) attached to the base plate (5) and a fabric which interacts with the hook-and-loop fabric (8) and which is attached to the facing surface of the adapter plate (6).

3. Portable power tool according to Claim 1 or 2, **characterized in that** a standard plate (7) is provided in addition to the adapter plate (6), which standard plate (7) is to be connected to the base plate (5) via a connecting device (11).

4. Portable power tool according to Claim 3, **characterized in that** the connecting device (11) for the standard plate (7) is formed separately from the connecting device (11) for the adapter plate (6).

5. Portable power tool according to Claim 4, **characterized in that** the connecting device (11) for the standard plate (7) is designed as a screwed connection.

6. Portable power tool according to one of Claims 3 to 5, **characterized in that** the base plate (5), the adapter plate (6) and the standard plate (7) form a plate stack.

7. Portable power tool according to Claim 6, **characterized in that**, within the plate stack, the adapter plate (6) is arranged between the base plate (5) and the standard plate (7).

8. Portable power tool according to Claim 6 or 7, **characterized in that** an aperture (10) is made in the adapter plate (6), through which aperture (10) a connecting element of the connecting device (11) for the standard plate (7) is passed.

9. Portable power tool according to one of Claims 3 to 8, **characterized in that** an aperture (10) for the connecting device (11) of the adapter plate (6) is made in the standard plate (7).

## Revendications

1. Machine-outil à main entraînée par moteur, en particulier scie sauteuse (1), comprenant une plaque d'assise (4) avec une ouverture de passage (9) pour l'outil de la machine-outil à main, la plaque d'assise (4) étant construite en deux parties avec une plaque de base (5) et une plaque d'adaptateur (6), et la plaque de base (5) étant connectée au boîtier (2) de la machine-outil à main, un dispositif de connexion (11) étant réalisé sur la plaque de base (5), par le biais duquel la plaque d'adaptateur (6) est raccordée de manière détachable à la plaque de base (5), la plaque d'adaptateur (6) adaptée à la surface de la pièce étant raccordée à la plaque de base (5) par le biais d'une connexion par bandes agrippantes, **caractérisée en ce que** la plaque de base (5) présente des parois latérales qui délimitent un espace de réception pour recevoir la plaque d'adaptateur (6).

2. Machine-outil à main selon la revendication 1, **caractérisée en ce que** la connexion par bandes agrippantes comprend un tissu agrippant (8) appliqué sur la plaque de base (5) et un tissu coopérant avec le tissu agrippant (8), qui est appliqué sur la surface de la plaque d'adaptateur (6) disposée en regard.

3. Machine-outil à main selon la revendication 1 ou 2,
**caractérisée en ce qu'**en plus de la plaque d'adaptateur (6), une plaque standard (7) est prévue, laquelle doit être raccordée à la plaque de base (5) par le biais d'un dispositif de connexion (11).

4. Machine-outil à main selon la revendication 3, **caractérisée en ce que** le dispositif de connexion (11) pour la plaque standard (7) est réalisé séparément du dispositif de connexion (11) pour la plaque d'adaptateur (6).

5. Machine-outil à main selon la revendication 4, **caractérisée en ce que** le dispositif de connexion (11) pour la plaque standard (7) est réalisé sous forme de connexion vissée.

6. Machine-outil à main selon l'une quelconque des revendications 3 à 5,
**caractérisée en ce que** la plaque de base (5), la plaque d'adaptateur (6) et la plaque standard (7) forment un paquet de plaques.

7. Machine-outil à main selon la revendication 6, **caractérisée en ce qu'**à l'intérieur du paquet de plaques, la plaque d'adaptateur (6) est disposée entre la plaque de base (5) et la plaque standard (7).

8. Machine-outil à main selon la revendication 6 ou 7,
**caractérisée en ce que** dans la plaque d'adaptateur (6) est pratiqué un évidement (10) à travers lequel est guidé un élément de- connexion du dispositif de connexion (11) pour la plaque standard (7).

9. Machine-outil à main selon l'une quelconque des revendications 3 à 8,
**caractérisée en ce que** dans la plaque standard (7) est pratiqué un évidement (10) pour le dispositif de connexion (11) de la plaque d'adaptateur (6).
